Europäisches Patentamt

European Patent Office

Office européen des brevets

(11) Numéro de publication: **0 155 882**
**B1**

(12) **FASCICULE DE BREVET EUROPEEN**

(45) Date de publication du fascicule du brevet:
26.07.89

(51) Int. Cl.⁴: **H 03 M 13/00**

(21) Numéro de dépôt: 85400390.2

(22) Date de dépôt: 28.02.85

(54) Procédé et dispositif de protection contre les erreurs adaptés à la transmission de données numériques tramées.

(30) Priorité: 02.03.84 FR 8403283

(43) Date de publication de la demande:
25.09.85 Bulletin 85/39

(45) Mention de la délivrance du brevet:
26.07.89 Bulletin 89/30

(84) Etats contractants désignés:
DE GB IT

(56) Documents cités:
EP-A- 4 020 461
US-A- 3 688 039
US-A- 4 276 649

PATENTS ABSTRACTS OF JAPAN, vol. 5, no. 78 (E-58)
[750], 22 mai 1981 & JP - A - 56 25 853

(73) Titulaire: THOMSON-CSF, 51, Esplanade du Général de
Gaulle, F-92800 Puteaux (FR)

(72) Inventeur: Laurent, Pierre André, THOMSON-CSF
SCPI 173, bid Haussmann, F-75379 Paris Cedex 08 (FR)

(74) Mandataire: Lincot, Georges et al, THOMSON-CSF SCPI,
F-92045 PARIS LA DEFENSE CEDEX 67 (FR)

## Description

L'invention se rapporte au domaine de la transmission de données numériques, et en particulier à un procédé et à un dispositif de protection contre les erreurs adaptés à la transmission de données tramées.

Les procédés de protection contre les erreurs consistent à ajouter au message à transmettre des bits de redondance déterminés par un codage, au moyen d'un code détecteur et correcteur d'erreurs par exemple; ce codage permet de corriger les données reçues après passage dans le canal de transmission lorsque ces données sont affectées d'un taux d'erreur inférieur à la capacité de correction du code. Lorsque le canal de transmission introduit de fortes perturbations dans le message, le code correcteur d'erreurs doit être puissant et en conséquence la redondance introduite élevée.

En effet, lorsque le message numérique résulte d'un premier codage du signal d'information ayant pour but de transmettre une information de bonne qualité mais sous forme condensée, donc avec un débit numérique réduit, par exemple par un codage à prédiction linéaire pour un signal de parole, la transmission du message d'information ne peut être convenable que si le taux d'erreur subsistant après correction est faible et donc si les défauts dûs au canal de transmission peuvent être masqués. Or certains types de canaux de transmission sont de plus en plus perturbés: dans les systèmes tels que le radiotéléphone ou les liaisons tactiques du genre VHF-FM, cette dégradation de la qualité du canal de transmission est due respectivement à l'augmentation du trafic ou aux perturbations résultant d'un brouillage volontaire par l'ennemi.

D'une manière générale, les systèmes de transmission de données véhiculent des informations qui, de fait, sont toutes traitées de la même manière, mais qui dans de nombreux cas comportent certaines parties dont il est plus important de conserver l'intégrité que d'autres. Or les procédés habituels de protection contre les erreurs tendent à banaliser les différentes données en leur faisant subir le même traitement, même si dans certains cas particuliers des précautions supplémentaires sont prises pour certains bits du message, par exemple pour détecter les erreurs isolées affectant ces bits.

Lorsqu'un code correcteur puissant traite toutes les données de la même manière, une redondance élevée est introduite et conduit à une augmentation du débit de transmission. Il est donc nécessaire de réaliser un compromis entre la qualité de la transmission des données et la capacité du canal de transmission.

Dans certains cas, le fait que dans un message à transmettre, les données n'ont pas toutes la même importance est utilisé. A titre d'exemple, pour une transmission de signal de parole codé, un certain nombre de systèmes de numérisation utilisent le principe du codage de la parole par tranches de durée fixe: Pour chaque tranche sont transmises d'une part des caractéristiques du conduit vocal, très importantes et variant pratiquement peu d'une trame à l'autre, et d'autre part un ensemble de données représentant l'excitation dudit conduit en particulier l'énergie transmise par le signal. Une erreur portant sur les bits relatifs aux caractéristiques «importantes» peut se traduire par une altération notable de la qualité de la liaison. En conséquence, certains systèmes prévoient des codages correcteurs apportant plus ou moins de redondance suivant les différents types d'informations transmises. Un système de ce type est décrit par exemple dans le brevet japonais n° 56-25 853.

Le problème résolu par la présente invention est la mise au point d'un procédé et d'un dispositif de protection contre les erreurs qui permettent d'augmenter notablement la qualité de la liaison en réduisant la sensibilité de l'information véhiculée aux perturbations apportées par le canal seulement au prix d'une légère augmentation du débit d'information à transmettre en combinant un codage correcteur d'effacement réservé aux bits importants et un entrelacement des bits dans des blocs transmis séparément.

Suivant l'invention un procédé de protection contre les erreurs adapté à la transmission de données numériques tramées, chaque trame comportant un nombre $N_1$ de bits à protéger particulièrement et un nombre $N_2$ d'autres bits, est caractérisé en ce qu'il consiste à l'émission, à coder les $N_1$ bits à protéger par un codage correcteur d'effacements introduisant une redondance R, les $RN_1$ bits résultant de ce codage d'une part et les $N_2$ autres bits d'autre part étant distribués en proportions constantes entre un nombre B de blocs de données transmis successivement et indépendamment formant une trame, et en ce que, à la réception, une trame est déclarée valide lorsqu'au plus

$$\frac{B(R-1)}{4}$$

blocs sont effacés ou faux, les $N_1$ bits protégés d'une trame valide étant restitués par le décodage correcteur d'effacements et les

$$\frac{N_2}{B}$$

bits non protégés des blocs effacés ou faux d'une trame valide étant remplacés par une séquence prédéterminée de

$$\frac{N_2}{B}$$

bits.

L'invention a également pour objet un dispositif de protection contre les erreurs destiné à la mise en œuvre de ce procédé.

L'invention sera mieux comprise et d'autres caractéristiques apparaîtront à l'aide de la description qui suit en référence aux figures annexées.

- La figure 1 est un diagramme permettant d'expliquer le procédé de protection contre les erreurs suivant l'invention.

- La figure 2 est un schéma fonctionnel de la partie codeur, à l'émission, d'un mode de réalisation du dispositif de protection contre les erreurs suivant l'invention.

- La figure 3 est un schéma fonctionnel de la partie décodeur, à la réception, du même mode de réalisation du dispositif de protection selon l'invention.

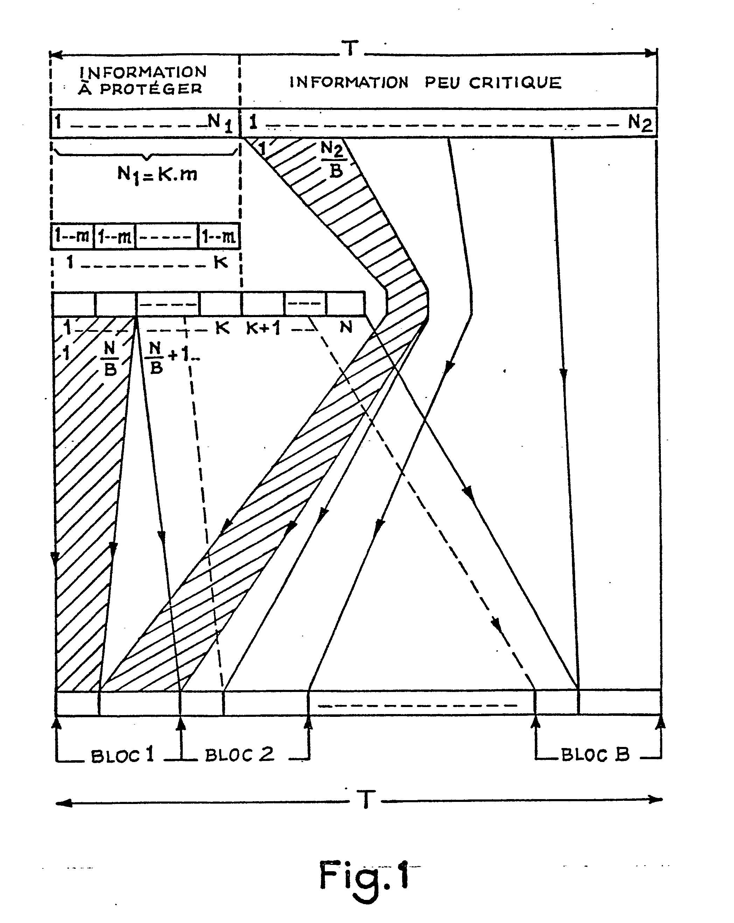

Le diagramme explicatif de la figure 1 permet de comprendre le fonctionnement du procédé de protection contre les erreurs suivant l'invention. Comme indiqué ci-dessus, ce procédé de protection s'applique aux données numériques découpées en trames de durée fixe, et ayant chacune en proportions constantes une partie comportant des données à protéger particulièrement et une autre partie comportant des données supportant une protection moindre.

Dans un exemple d'application, pour un système de transmission de parole codée, le train numérique est découpé en trames correspondant à une durée fixe de parole codée, typiquement 15 à 30 mS. Chacune de ces trames comporte dans une première partie des caractéristiques essentielles à protéger, qui peuvent être les cœfficients caractéristiques du tractus vocal et les énergies moyennes du signal de parole pendant la tranche de temps considérée. Dans une seconde partie de la trame, les autres données sont transmises, ces données servant à définir par exemple l'erreur de prédiction c'est-à-dire l'excitation qu'il convient de générer à l'entrée du décodeur pour reproduire la parole d'origine. Comme indiqué ci-dessus, le procédé de protection permet de protéger efficacement la liaison contre divers types de perturbations. Ces perturbations peuvent être des erreurs isolées affectant aléatoirement chacun des symboles transmis ou la non-réception temporaire due par exemple à un «fading» sélectif ou à un brouillage (volontaire ou non); ou encore une fausse réception due à une intrusion accidentelle par un signal de niveau suffisant appartenant à une communication autre que la communication utile, ou encore apparaissant en l'absence d'émission utile.

Le procédé de protection suivant l'invention met en œuvre un codage défini de la manière suivante:

Dans une trame de durée T, un nombre $N_1$ de bits doit être particulièrement protégé, une erreur portant sur l'un d'entre eux se traduisant par une altération importante de la qualité de la réception.

Le reste de la trame, composé de $N_2$ bits, est considéré comme moins fragile et peut, le cas échéant, être remplacé par des séquences artificielles dont l'effet est considéré comme acceptable à la réception. Dans l'exemple d'application à la transmission de parole codée en numérique, pour laquelle le débit moyen est de l'ordre de 8 à 20 kilobits/seconde par exemple, on constate que la partie considérée comme moins fragile de la trame est nettement supérieure à la moitié de cette trame. Le procédé de protection suivant l'invention consiste à rajouter de la redondance aux $N_1$ bits considérés comme fragiles au moyen d'un codage correcteur d'effacements, puis à découper l'ensemble ainsi obtenu en B parties, chacune complétée par une fraction

$$\frac{N_2}{B}$$

des $N_2$ bits restants. Les B blocs ainsi obtenus constituent l'information à transmettre, cette information étant ensuite codée de manière connue en soi par un code détecteur et correcteur d'erreurs et transmise dans des blocs codés différents et indépendants.

Si R est le taux de redondance introduit sur les bits considérés comme fragiles, le débit à transmettre du fait de la protection supplémentaire contre les erreurs ainsi introduite est multiplié par un facteur égal à

$$\frac{RN_1 + N_2}{N_1 + N_2}.$$

Cette augmentation du débit est très limitée dans tous les cas où les $N_1$ bits importants représentent une faible proportion de la trame à transmettre; mais l'influence de ce codage supplémentaire est très importante sur la qualité de la trame restituée.

A titre d'exemple, le traitement suivant l'invention appliqué à un codage APC-SQ-4 est donné ci-après. Les trames utilisées dans ce système de codage de la parole, de type à prédiction linéaire, comportent chacune 240 bits. Parmi ceux-ci $N_1 = 60$ bits sont consacrés aux paramètres importants du signal de parole: période de mélodie, fréquence éventuelle du fondamental... parité, et $N_2 = 180$ bits sont réservés à la transmission de l'erreur de prédiction. Cette trame qui correspond à une durée de parole T = 25 mS est transmise sur le canal de transmission en blocs codés de la manière suivante:

- Dans une première phase les $N_1 = 60$ premiers bits sont découpés en K mots de m bits chacun, $K.m = N_1$. Par exemple, les $N_1 = 60$ premiers bits sont découpés en K = 12 mots de m = 5 bits.

- Dans une seconde phase, à ces K mots on rajoute N−K mots de m bits chacun pour obtenir N mots par un codage correcteur d'effacements selon une méthode algébrique, dont un exemple est décrit ci-après, qui permet d'introduire de la redondance sur ces $N_1$ bits. Par exemple, N−K = 8 mots, soit N = 20 mots de cinq bits ou 100 bits au total.

- Le système de transmission dans lequel est mis en œuvre le procédé de correction suivant l'invention est à même de transmettre exactement B blocs de données codées, décorrélés au point de vue des perturbations. Dans une troisième phase les N.m bits sont donc répartis dans B blocs comportant chacun

$$\frac{Nm}{B}$$

bits pris parmi les N.m bits, c'est-à-dire

$$\frac{N}{B}$$

mots, et complétés par

$$\frac{N_2}{B}$$

bits non protégés pris dans les $N_2$ bits. Soit, avec B = 5 blocs,

$$\frac{100}{5} + \frac{180}{5} = 56$$

bits dans chaque bloc.

La trame initiale a donc été transformée par le procédé de protection suivant l'invention en une nouvelle trame comportant B blocs, soit 5 blocs de 56 bits dans l'exemple décrit ci-dessus. Si le débit est initialement dans une telle transmission de 9.6 kilobits/seconde, il passe alors à

$$\frac{5 \times 56}{25} = 11.2$$

kilobits/seconde, ce qui correspond à une multiplication du débit par un facteur

$$\frac{7}{6}.$$

Les blocs codés par ce premier codage sont ensuite codés au moyen d'un codage détecteur et correcteur d'erreurs, de manière connue en soi. A la réception, l'utilisation du codage détecteur et correcteur d'erreurs se traduit au niveau du récepteur par l'information suivante au niveau d'un bloc donné:

1) le bloc est déclaré effacé car de qualité insuffisante pour en permettre la correction, les erreurs dépassant la capacité du code correcteur.

2) Le bloc est déclaré correct et l'information qu'il contient est effectivement correcte, le code détecteur correcteur d'erreurs ayant permis de le restituer convenablement.

3) Le bloc est déclaré correct et l'information qu'il contient est fortement entachée d'erreurs, ce qui correspond à un faux décodage.

Des trois éventualités ci-dessus, seules les deux premières ont une probabilité d'occurrence notable. La dernière est considérée comme improbable si le code correcteur et la méthode de décodage associée sont convenablement choisis. Le procédé de protection contre les erreurs suivant l'invention tient compte de cette information.

Lorsque l'émission utile est présente, les seuls cas d'erreurs statistiquement significatifs sont donc ceux correspondant à la non-réception d'un bloc comme expliqué ci-dessus. Compte tenu du premier codage préconisé, une trame de B blocs est déclarée non reçue lorsque parmi les B blocs qui la véhiculent, plus de

$$\frac{B(R-1)}{R}$$

sont effacés. Or dans l'exemple ci-dessus

$$R = \frac{5}{3}$$

ce qui permet de reconstituer la trame de 5 blocs lorsque au plus deux blocs sont considérés comme effacés, soit une tolérance de 40% de blocs effacés par trame. Les valeurs numériques indiquées ci-dessus peuvent être modifiées pour permettre de supporter une tolérance supérieure, par exemple 60% de blocs effacés, soit trois blocs parmi cinq. Dans ce cas la redondance R doit être égale à

$$\frac{5}{2}$$

et N = 30 mots de cinq bits doivent être transmis pour K = 12 mots découpés dans la trame initiale. Le débit correspondant devient alors 13.2 kilobits/seconde soit une augmentation de

$$\frac{11}{8}$$

par rapport au débit d'origine, 9.6 kilobits. Comme on le constate l'augmentation du débit reste limitée alors que les performances sont notablement améliorées. Ces débits suite au codage par le procédé suivant l'invention sont évidemment encore augmentés, mais de manière classique, par le code détecteur correcteur d'erreurs appliqué à chacun des B blocs avant la transmission. De plus, pour les systèmes de transmission du type à sauts de fréquence par exemple, où des périodes durant lesquelles aucune transmission n'est réalisée sont prévues dans la liaison, le débit doit être encore augmenté pendant les périodes de transmission des informations.

A la réception, après décodage des B blocs codés par le code correcteur d'erreurs qui ont servi à véhiculer la trame complète, le décodeur précise pour chaque bloc si celui-ci est présumé correct ou s'il doit être considéré comme effacé. Les

$$\frac{Nm}{B}$$

premiers bits de chacun des blocs sont extraits pour reconstituer une séquence de $Nm = RN_1$ symboles représentant les paramètres importants auxquels a été ajoutée la redondance par le premier codage, correcteur d'effacements. Ces symboles sont décodés par l'algorithme de décodage correspondant qui ne corrige que les effacements. Le résultat de ce deuxième décodage peut être alors le suivant:

1) Dans un premier cas il est impossible de reconstituer les $N_1$ bits d'origine à partir de ces $RN_1$ bits reçus. Dans ce cas la trame est considérée comme effacée dans son ensemble. Les $N_1$ bits sont alors remplacés par une séquence de $N_1$ autres bits déduits des trames voisines, ces bits représentant par exemple les valeurs retenues pour la trame précédente avec une éventuelle pondération, et les $N_2$ bits restants sont remplacés par une séquence artificielle de $N_2$ bits d'effet minime sur la qualité finale de l'information restituée. Par exemple, dans le cas de la parole, les $N_2$

bits peuvent être remplacés par une séquence numérique correspondant à un silence.

2) Dans le deuxième cas il est possible de reconstituer les $N_1$ bits d'origine et la trame est supposée correcte. Cependant, pour chaque bloc détecté comme effacé par le code détecteur correcteur d'erreurs, le paquet de

$$\frac{N^2}{B}$$

bits véhiculé par un tel bloc est remplacé par une séquence artificielle correspondant à un silence de la même manière que ci-dessus. En effet les bits considérés ont de fortes chances d'être erronés et leur remplacement pur et simple par une séquence caractéristique d'un silence conduit à une meilleure qualité de liaison que si l'on gardait ces bits erronés pour les transformer en parole.

Ce procédé présente plusieurs avantages:

Lors de l'absence d'émission utile, les blocs reçus sont peu fréquents, il s'agit de fausse réception. Faute d'avoir un nombre suffisant de blocs pour les différentes trames, chacune d'entre elles est considérée comme absente. En conséquence le remplacement par du silence est exactement ce qui convient puisque du côté de l'émetteur et dans l'exemple de la transmission de parole, les données à transmettre étaient du silence ou aucun signal, par exemple lorsqu'un détecteur d'activité vocale indique qu'aucun signal ne doit être transmis.

Lorsque l'émission utile est présente, comme indiqué ci-dessus les seuls cas statistiquement significatifs sont ceux correspondant à la non-réception de quelques blocs répartis dans les trames successives. Comme indiqué ci-dessus, une trame n'est déclarée non reçue que si plus de

$$\frac{B(R-1)}{R}$$

blocs parmi les B blocs qui la véhiculent sont effacés. Ceci représente un progrès notable par rapport au cas où tous les blocs sur lesquels la trame a été dispersée doivent être déclarés corrects pour que la trame elle-même soit déclarée correcte. C'est le cas habituellement lorsque la trame est trop longue pour être véhiculée par un seul bloc.

Enfin le remplacement local des bits correspondant aux blocs effacés par des séquences prédéterminées adaptées contribue à minimiser l'effet des erreurs de transmission sur la qualité finale de la parole synthétisée à la réception.

Dans un exemple de codage correcteur d'effacement dérivé de la méthode de codage des codes Reed-Solomon, les $N-K$ mots de redondance sont établis à partir des K mots d'information de la manière suivante:

$$R_i = A_{i,1} I_1 + A_{i,2} I_2 + \ldots + A_{i,K} I_K$$
$$1 \leqslant i \leqslant N-K$$

où les $R_i$ sont les valeurs des mots (ou «symboles») de redondance, les $I_i$ sont les valeurs des mots d'information, et les $A_{i,j}$ des cœfficients constants choisis de telle façon que, si au plus $N-K$ symboles quelconques choisis parmi les $R_i$ et/ou les $I_i$ sont inconnus (effacés) on puisse réordonner le système de $N-K$ équations linéaires ci-dessus pour calculer lesdits symboles à partir des K symboles connus. On notera que les opérations (addition, multiplication, ...) doivent se faire avec les règles spécifiques au Corps de Galois à $2^m$ éléments si les mots/symboles comptent m bits chacun.

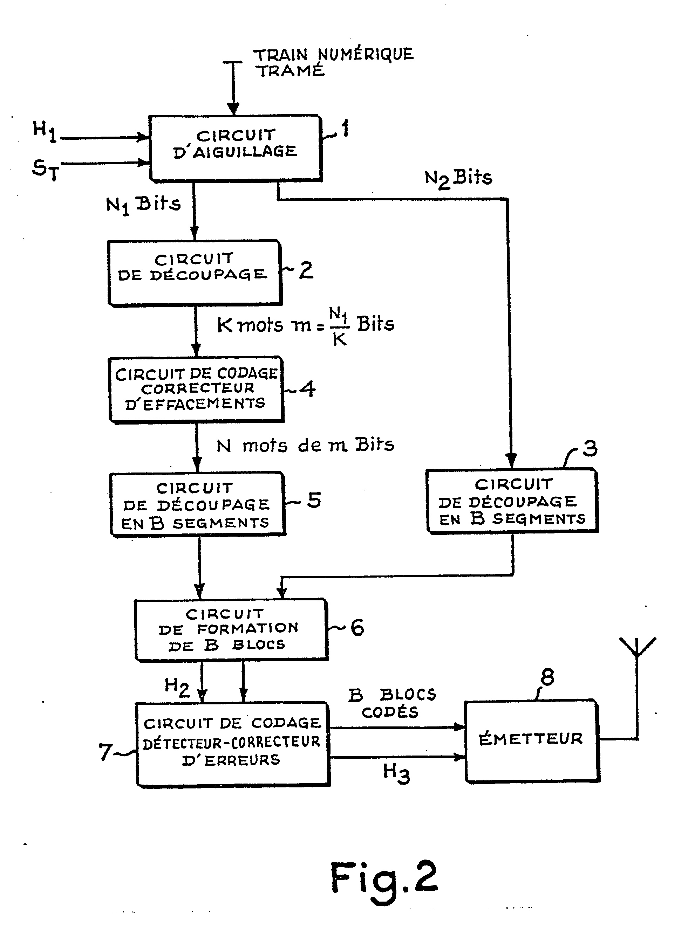

La figure 2 représente la partie codeur à l'émission, d'un mode de réalisation du dispositif de protection contre les erreurs suivant l'invention.

Un circuit d'aiguillage 1 reçoit, par exemple d'un système de numérisation de parole, le train numérique tramé transportant l'information numérisée, et l'horloge bit $H_1$ et le signal de synchronisation trame $S_T$ qui lui sont associés. Ce circuit d'aiguillage sépare les $N_1$ bits à protéger de chaque trame des $N_2$ bits moins fragiles, et les applique respectivement à un circuit de découpage en K mots, 2, et à un circuit de découpage en B segments 3. La sortie du circuit 2 est reliée à l'entrée d'un circuit de codage par un code correcteur d'effacements, 4, qui introduit la redondance aux $N_1$ bits à protéger particulièrement pour former N mots, et la sortie de ce circuit de codage est reliée à l'entrée d'un circuit de découpage en B segments, 5. Les sorties des deux circuits de découpage 3 et 5 sont reliées aux entrées d'un circuit de formation de B blocs associant dans chacun des B blocs un segment de

$$\frac{N}{B}$$

mots résultant du codage correcteur d'effacements à un segment de

$$\frac{N_2}{B}$$

bits d'information peu critique. Le train numérique résultant issu du circuit 6 avec son horloge bit $H_2$ sont appliqués au circuit de codage détecteur correcteur 7 qui fournit pour chaque trame les B blocs codés résultant de ce double codage avec l'horloge correspondante $H_3$, à transmettre sur le canal de transmission par l'intermédiaire de l'émetteur 8.

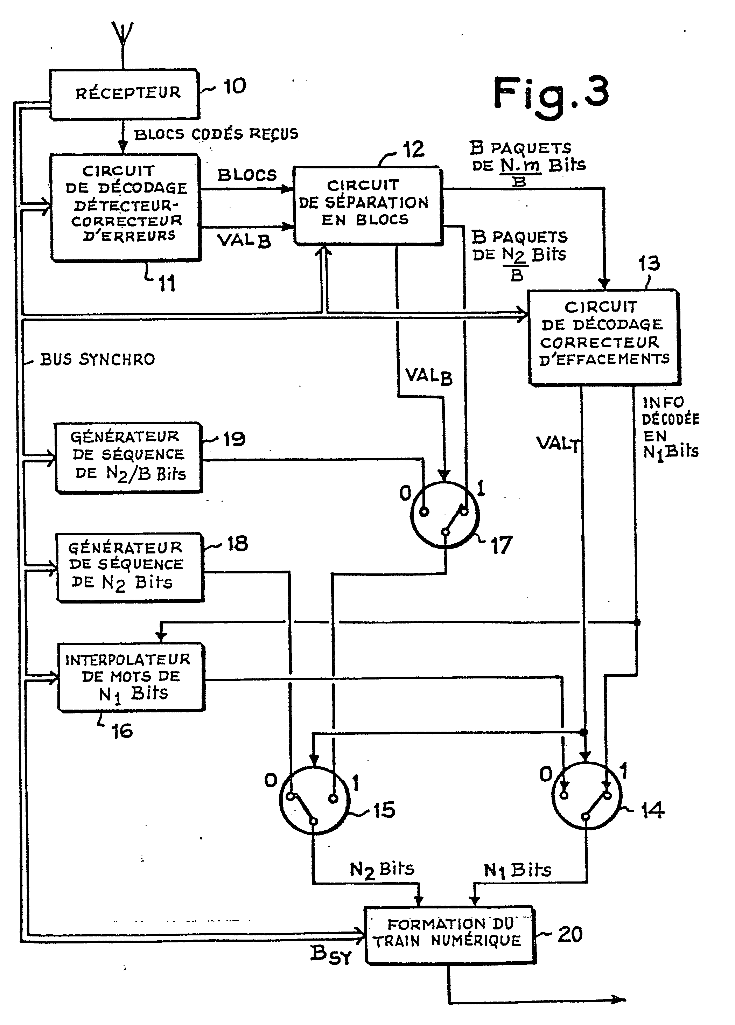

La figure 3 représente, la partie décodeur, à la réception, du même mode de réalisation du dispositif de protection contre les erreurs. Le récepteur 10 fournit la suite des blocs codés reçus, et les signaux de synchronisation par l'intermédiaire d'un «bus synchro» distribuant les signaux d'horloge et de synchronisation aux autres éléments. Ces blocs codés reçus sont appliqués à un circuit de décodage détecteur et correcteur d'erreurs, 11, qui fournit les blocs après décodage suivant l'algorithme associé à celui du circuit de codage 7 à l'émission, et un signal de validation «$VAL_B$» de ces blocs codés reçus. Ces signaux sont appliqués à un circuit de séparation 12 des informations issues des B blocs qui fournit d'une part les paquets de

$$\frac{Nm}{B}$$

bits, affectés chacun d'une variable d'état relative à la validité du bloc dont il est issu, et d'autre part les paquets de

$$\frac{N_2}{B}$$

bits. Les paquets de

$$\frac{Nm}{B}$$

bits, avec les validités associées, sont appliqués à un circuit de décodage correcteur d'effacement 13 qui, si au plus

$$\frac{B(R-1)}{R}$$

blocs sont considérés comme effacés, reconstitue les $N_1$ bits de l'information protégée et envoie un signal de validité trame, $VAL_T$ égal à 1, sur la sortie correspondante, et qui si plus de

$$\frac{B(R-1)}{R}$$

blocs sont considérés comme effacés, considère la trame complète comme effacée et envoie un signal de validité trame $VAL_T$ égal à 0 sur la sortie correspondante. Ce signal de validité trame commande deux circuits d'aiguillage 14 et 15, le premier recevant sur une première entrée, validée par l'état 1 du signal de validité trame, les $N_1$ bits reconstitués par le circuit de décodage correcteur d'effacements, et sur une seconde entrée, validée pour l'état 0 du signal de validité trame, une séquence de $N_1$ bits issue d'un circuit interpolateur 16 recevant sur son entrée la séquence précédente de $N_1$ bits issue du circuit de décodage 13.

Le circuit d'aiguillage 15 reçoit sur une première entrée, validée par l'état 1 du signal de validité trame, le signal de sortie d'un circuit d'aiguillage 17 et sur une seconde entrée, validée par l'état 0 du signal de validité trame, une séquence prédéterminée de $N_2$ bits issue d'un générateur de séquence de $N_2$ bits, 18. Le circuit d'aiguillage 17 a une entrée de commande recevant le signal de validité des blocs, $VAL_B$, et a une première entrée, validée pour $VAL_B = 1$, reliée à la sortie du circuit de séparation 12 fournissant les paquets de

$$\frac{N_2}{B}$$

bits, et une seconde entrée, validée pour $VAL_B = 0$, reliée à la sortie d'un générateur de séquence de

$$\frac{N_2}{B}$$

bits, 19, fournissant une séquence prédéterminée permettant de remplacer, pour un bloc effacé dans une trame correcte, l'information peu critique correspondante par cette séquence.

Les sorties des circuits d'aiguillage 14 et 15 sont reliées à un circuit de restitution des trames du train numérique, 20. Ces trames numériques restituées pourront alors alimenter un circuit de restitution de l'information initiale, par exemple un synthétiseur de parole.

Les schémas fonctionnels décrits ci-dessus permettent de comprendre le fonctionnement du dispositif de protection contre les erreurs suivant l'invention. Dans un dispositif de protection inséré dans un système d'émission-réception, les fonctions du dispositif de protection peuvent être assurées par traitement des données numériques dans un microprocesseur convenablement programmé.

L'invention n'est pas limitée au procédé et au dispositif de protection contre les erreurs précisément décrits ci-dessus.

En effet, la description ci-dessus a été faite en partant d'un système de transmission qui met en œuvre un codage détecteur correcteur d'erreurs. En conséquence, le codage et le décodage introduits par l'invention ont été limités à la correction d'effacements. Il est tout à fait possible dans un système de transmission qui n'aurait pas déjà un codage détecteur correcteur d'erreurs de réaliser ce codage dans le dispositif de protection suivant l'invention en même temps que le codage correcteur d'effacement par blocs, la validité des blocs étant alors donnée à la réception par le même circuit de décodage que la validité trame.

Dans cette éventualité, la forme générale des équations permettant de calculer les symboles de redondance est conservée, mais des contraintes supplémentaires sont à prendre en considération pour le choix des cœfficients $A_{ij}$ afin de faciliter le décodage: les codes de Reed Solomon en sont l'exemple le plus connu.

Cette invention est applicable à tous systèmes de transmission de données tramées ou susceptibles d'être mises sous forme tramée, où il est nécessaire de préserver l'intégrité de certaines données privilégiées tout en admettant une certaine dégradation sur les autres.

## Revendications

1. Procédé de protection contre les erreurs adapté à la transmission de données numériques tramées, chaque trame comportant un nombre $N_1$ de bits à protéger particulièrement et un nombre $N_2$ d'autres bits, caractérisé en ce qu'il consiste à l'émission, à coder les $N_1$ bits à protéger par un codage correcteur d'effacements introduisant une redondance R, les $RN_1$ bits résultant de ce codage d'une part et les $N_2$ autres bits d'autre part étant distribués en proportions constantes entre un nombre B de blocs de données transmis successivement et indépendamment formant une trame et en ce que, à la réception, une trame est déclarée valide lorsqu'au plus

$$\frac{B(R-1)}{R}$$

blocs sont effacés ou faux, les $N_1$ bits protégés d'une trame valide étant restitués par le décodage correcteur d'effacement et les

$$\frac{N_2}{B}$$

bits non protégés des blocs effacés ou faux d'une trame valide étant remplacés par une séquence prédéterminée de

$$\frac{N_2}{B}$$

bits.

2. Procédé selon la revendication 1, caractérisé en ce que, à la réception, les $N_1$ bits protégés d'une trame déclarée non valide sont remplacés par une séquence de $N_1$ bits dérivés des trames précédentes, et en ce que les $N_2$ bits non protégés d'une trame déclarée non valide sont remplacés par une séquence prédéterminée de $N_2$ bits.

3. Procédé selon l'une des revendications 1 ou 2, caractérisé en ce que, à l'émission, après le codage correcteur d'effacement, les blocs de données sont codés par un second codage, détecteur et correcteur d'erreurs, et en ce que, à la réception, le décodage détecteur et correcteur d'erreurs correspondant permet de décider de l'effacement ou de la validité des blocs, le décodage correcteur d'effacement décidant de la validité d'une trame dans son ensemble lorsqu'au plus

$$\frac{B(R-1)}{R}$$

blocs sont déclarés non validés à la suite du premier décodage.

4. Procédé selon l'une des revendications 1 ou 2, caractérisé en ce que, à l'émission, le codage correcteur d'effacement est également détecteur et correcteur d'erreurs, et en ce que, à la réception, le décodage correspondant décide d'abord de la validité des blocs puis de la validité d'une trame, une trame étant validée lorsqu'au plus

$$\frac{B(R-1)}{R}$$

blocs sont déclarés non valides.

5. Dispositif de protection contre les erreurs adapté à la transmission de données numériques tramées, chaque trame comportant $N_1$ bits à protéger particulièrement et $N_2$ autres bits, caractérisé en ce qu'il comporte, associés à l'émetteur, un circuit de codage préalable (4) introduisant une redondance R, un circuit de découpage (5) des $RN_1$ bits résultant en B paquets et un second circuit de découpage (3) des $N_2$ autres bits en B paquets, un circuit (6) de formation des B blocs de données formant une trame et comportant chacun un paquet de bits issu de chacun des circuits de découpage, les B blocs résultants étant transmis indépendamment, et en ce qu'il comporte, associés au récepteur, un circuit de séparation (12) des deux paquets de bits de chaque bloc reçu, un circuit de décodage correcteur d'effacement (13) recevant les B paquets de

$$\frac{RN_1}{B}$$

bits et restituant $N_1$ bits, un circuit interpolateur (16) élaborant pour chaque trame une séquence de $N_1$ bits déduits des $N_1$ bits des trames précédentes, un générateur (18) d'une séquence prédé-terminée de $N_2$ bits, un générateur (19) d'une sé-quence prédéterminée de

$$\frac{N_2}{B}$$

bits et des circuits d'aiguillage (14,15,17) commandés par un signal à validité trame ou de validité bloc pour transmettre à la sortie du dispositif les $N_1$ bits restitués ou la séquence de $N_1$ bits issue de l'interpolateur (16) selon que la trame est considérée comme valide ou non, et une suite de B pa-quets de

$$\frac{N_2}{B}$$

bits issus du circuit de séparation (12) ou du géné-rateur de séquence de

$$\frac{N_2}{B}$$

bits (19) selon que le bloc duquel est issu ce paquet est considéré comme valide ou non.

## Claims

1. An error protection method adapted to the transmission of framed digital data, wherein each frame comprises a number $N_1$ of bits to be particularly protected and a number $N_2$ of other bits, characterized in that it consists, on the transmission side, in encoding the $N_1$ bits to be protected by an extinction correction encoding that introduces a redundancy R, the $R.N_1$ bits resulting from this encoding on the one hand, and the $N_2$ other bits on the other hand being distributed in constant proportions over a number B of data blocks forming a frame and being transmitted successively and independently from one another, and in that, on the reception side, a frame is declared valid when at most $B(R-1)/R$ blocks are extinguished or false, the protected $N_1$ bits of a valid frame being restituted via the extinction correction decoding, and the unprotected $N_2/B$ bits of the extinguished or false blocks of a valid frame being replaced by a predetermined sequence of $N_2/B$ bits.

2. A method according to claim 1, characterized in that, on the reception side, the protected $N_1$ bits of a frame declared invalid are replaced by a sequence of $N_1$ bits derived from the preceding frames, and in that the unprotected $N_2$ bits of a frame declared invalid are replaced by a predeter-mined sequence of $N_2$ bits.

3. A method according to one of claims 1 or 2, characterized in that, on the transmission side, subsequent to the extinction correction encoding, the data blocks are encoded by means of a second error detection and correction encoding, and in that, on the reception side, the corresponding error detection and correction decoding allows to decide on the extinction or the validity of the blocks, the extinction correction decoding deciding on the validity of a frame as a whole, if at most $B(R-1)/R$ blocks are declared invalid subsequent to the first decoding.

4. A method according to claim 1 or 2, characterized in that, on the transmission side, the extinction correction encoding is also adapted to detect and correct errors, and that, on the reception side, the corresponding decoding decides on the validity of the blocks first, and then over the validity of a frame, with a frame being validated, if at most $B(R-1)/R$ blocks are declared invalid.

5. An error protection device adapted to the transmission of framed digital data, wherein each frame comprises a number $N_1$ of bits to be particularly protected and a number $N_2$ of other bits, characterized in that it comprises, associated with the transmitter, a preliminary encoding circuit (4), that introduces a redundancy R, a circuit (5) for subdividing the resulting $R.N_1$ bits into B packages, and a second circuit (3) for subdividing the other $N_2$ bits into B packages, a circuit (6) for forming the B data blocks constituting a frame and each comprising a package of bits issued by each of the subdividing circuits, the resulting blocks B being transmitted independently from one another, and that it comprises, associated with the receiver, a circuit (12) for separating the two packages of bits of each received block, an extinction correction decoder circuit (13), that receives the B packages of $(R.N_1)/B$ bits and restitutes the $N_1$ bits, an interpolating circuit (16) that elaborates for each frame a sequence of $N_1$ bits derived from the $N_1$ bits of the preceding frames, a generator (18) for producing a predetermined sequence of $N_2$ bits, a generator (19) for producing a predetermined sequence of $N_2/B$ bits, and switching circuits (14,15,17) controlled by a frame validity signal or a block validity signal and adapted to transmit to the output of the device the restituted $N_1$ bits or else the sequence of the $N_1$ bits issued by the interpolating circuit (16) depending upon whether the frame is considered to be valid or not, and to transmit a sequence of B packages of $N_2/B$ bits issued by the separation circuit (12) or else by the generator (19) for producing a sequence of $N_2/B$ bits, depending upon whether the block that has issued the package is considered valid or not.

**Patentansprüche**

1. Verfahren zum Schutz gegen Fehler, angepaßt an die Übertragung rahmengruppierter digitaler Daten, wobei jeder Rahmen eine Anzahl $N_1$ besonders zu schützender Bits und eine Anzahl $N_2$ anderer Bits aufweist, dadurch gekennzeichnet, daß es auf der Sendeseite in der Kodierung der $N_1$ zu schützenden Bits durch eine Löschungskorrekturkodierung besteht, welche eine Redundanz R einführt, wobei die aus dieser Kodierung resultierenden $R.N_1$ Bits einerseits und die anderen Bits $N_2$ andererseits in konstanten Anteilen auf eine Anzahl B von Datenblöcken verteilt sind, die nacheinander und unabhängig voneinander übertragen werden und einen Rahmen bilden, und daß auf der Empfangsseite ein Rahmen für gültig erklärt wird, wenn höchstens $B(R-1)/R$ Blöcke gelöscht oder falsch sind, wobei die $N_1$ geschützten Bits eines gültigen Rahmens durch die Löschungskorrekturdekodierung wiederhergestellt werden und die $N_2/B$ nicht geschützten Bits der gelöschten oder falschen Blöcke eines gültigen Rahmens durch eine vorbestimmte Folge von $N_2/B$ Bits ersetzt werden.

2. Verfahren nach Anspruch 1, dadurch gekennzeichnet, daß auf der Empfangsseite die $N_1$ geschützten Bits eines für ungültig erklärten Rahmens durch eine Folge von $N_1$ aus den vorhergehenden Rahmen abgezweigten Bits ersetzt werden, und daß die $N_2$ nicht geschützten Bits eines für ungültig erklärten Rahmens durch eine vorbestimmte Folge von $N_2$ Bits ersetzt werden.

3. Verfahren nach einem der Ansprüche 1 oder 2, dadurch gekennzeichnet, daß auf der Sendeseite die Datenblöcke nach der Löschungskorrekturkodierung durch eine zweite Fehlererfassungs- und -korrekturkodierung verschlüsselt werden, und daß auf der Empfangsseite die entsprechende Fehlererfassungs- und -korrekturdekodierung über die Löschung oder Gültigkeit der Blöcke zu entscheiden erlaubt, wobei die Löschungskorrekturdekodierung über die Gültigkeit eines Rahmens in seiner Gesamtheit entscheidet, wenn höchstens $B(R-1)/R$ Blöcke als Ergebnis der ersten Dekodierung für ungültig erklärt werden.

4. Verfahren nach einem der Ansprüche 1 oder 2, dadurch gekennzeichnet, daß auf der Sendeseite die Löschungskorrekturkodierung zugleich Fehlererfassungs- und -korrekturkodierung ist, und daß auf der Empfangsseite die entsprechende Dekodierung zunächst über die Gültigkeit der Blöcke, und dann über die Gültigkeit eines Rahmens entscheidet, wobei ein Rahmen für gültig erklärt wird, wenn höchstens $B(R-1)/R$ Blöcke für ungültig erklärt werden.

5. Vorrichtung zum Schutz gegen Fehler, angepaßt an die Übertragung rahmengruppierter digitaler Daten, wobei jeder Rahmen eine Anzahl $N_1$ besonders zu schützender Bits und eine Anzahl $N_2$ anderer Bits aufweist, dadurch gekennzeichnet, daß sie in Zuordnung zum Sender aufweist: einen Vorkodierkreis (4), der eine Redundanz R einführt, einen Kreis (5) zur Aufteilung der $R.N_1$ resultierenden Bits in B Pakete und einen zweiten Kreis (3) zur Aufteilung der $N_2$ anderen Bits in B Pakete, einen Kreis (6) zur Bildung von B einen Rahmen bildenden Datenblöcken, die je ein von jedem Aufteilkreis kommendes Bitpaket aufweisen, wobei die resultierenden B Blöcke unabhängig übertragen werden, und daß sie in Zuordnung zum Empfänger aufweist: einen Kreis (12) zur Trennung der beiden Bitpakete von jedem empfangenen Block, einen Löschungskorrekturdekodierkreis (13), der die B Pakete mit $(R.N_1)/B$ Bits empfängt und $N_1$ Bits wiederherstellt, einen Interpolationskreis (16), der für jeden Rahmen eine Folge von $N_1$ aus den $N_1$ Bits der vorhergehenden Rahmen abgeleiteten Bits erstellt, einen Generator (18) zur Erzeugung einer vorbestimmten Folge von $N_2$ Bits, einen Generator (19) zur Erzeugung einer vorbestimmten Folge von $N_2/B$ Bits, und Abzweigungskreise (14,15,17), die von einem Rahmen- oder Blockbewertungssignal gesteuert werden, um an den Ausgang der Vorrichtung die $N_1$ wiederhergestellten Bits oder die Folge von $N_1$ vom Interpolationskreis (16) ausgehenden Bits zu übertragen, je nachdem, ob der Rahmen als gültig oder ungültig bewertet wurde, sowie eine Folge von B vom Trennkreis (12) oder vom Generator (19) zur Erzeugung einer Folge von $N_2/B$ Bits kommenden Paketen zu $N_2/B$ Bits, je nachdem, ob der Block, aus welchem das Paket hervorgegangen ist, als gültig oder ungültig bewertet wurde.

INFORMATION
À PROTÉGER

INFORMATION PEU CRITIQUE

$1 — N_1$ $1 — N_2$

$N_1 = K.m$

$\frac{N_2}{B}$

$1--m$ $1--m$ $--$ $1--m$

$1 — K$

$1 — K$ $K+1 — N$

$\frac{N}{B}$ $\frac{N}{B}+1$

BLOC 1 BLOC 2 BLOC B

T

T

Fig.1

TRAIN NUMÉRIQUE
TRAMÉ

$H_1$

$S_T$

CIRCUIT
D'AIGUILLAGE ~1

$N_1$ Bits

$N_2$ Bits

CIRCUIT
DE DÉCOUPAGE ~2

$K$ mots $m = \dfrac{N_1}{K}$ Bits

CIRCUIT DE CODAGE
CORRECTEUR
D'EFFACEMENTS ~4

$N$ mots de $m$ Bits

CIRCUIT
DE DÉCOUPAGE
EN $B$ SEGMENTS ~5

CIRCUIT
DE DÉCOUPAGE
EN $B$ SEGMENTS ~3

CIRCUIT
DE FORMATION
DE $B$ BLOCS ~6

$H_2$

B BLOCS
CODÉS

7~ CIRCUIT DE CODAGE
DÉTECTEUR-CORRECTEUR
D'ERREURS

ÉMETTEUR ~8

$H_3$

# Fig.2

# Fig.3

RÉCEPTEUR — 10

BLOCS CODÉS REÇUS

CIRCUIT
DE DÉCODAGE
DÉTECTEUR-
CORRECTEUR
D'ERREURS

— 11

BLOCS

VAL_B

— 12

CIRCUIT
DE SÉPARATION
EN BLOCS

B PAQUETS
DE $\frac{N.m}{B}$ Bits

B PAQUETS
DE $\frac{N_2}{B}$ Bits

— 13

CIRCUIT
DE DÉCODAGE
CORRECTEUR
D'EFFACEMENTS

INFO
DÉCODÉE
EN
$N_1$ Bits

BUS SYNCHRO

VAL_B

GÉNÉRATEUR
DE SÉQUENCE
DE $N_2/B$ Bits

— 19

GÉNÉRATEUR
DE SÉQUENCE
DE $N_2$ Bits

— 18

0      1

— 17

VAL_T

INTERPOLATEUR
DE MOTS DE
$N_1$ Bits

— 16

0      1

— 15

0      1

— 14

$N_2$ Bits

$N_1$ Bits

FORMATION DU
TRAIN NUMÉRIQUE

— 20

B_SY